# EUROPEAN PATENT APPLICATION

(11) **EP 1 995 959 A2**
(43) Date of publication of application: **26.11.2008**
(21) Application number: 08151564.5
(22) Date of filing: 18.02.2008
(51) Int. Cl.: H04N 5/76

(54) **Video apparatus having integrated terminal and control method thereof**

(30) Priority: 25.05.2007 KR 20070050858
(71) Applicant: Samsung Electronics Co., Ltd., Suwon-si, Gyeonggi-Do (KR)
(72) Inventor: Baek, Nam-hoon, Banwol-dong, Taean-gu Hwaseong-si Gyeonggi-do (KR)
(74) Representative: Grünecker, Kinkeldey, Stockmair & Schwanhäusser Anwaltssozietät

(57) **Abstract**

A video apparatus having an integrated terminal and a control method thereof. The video apparatus may enable a video signal and/or an audio signal to be transmitted externally via a single terminal. In particular, a component video signal or a non-component video signal may be switched according to the type of cable, and then the switched signal may be output. Accordingly, the size of the video apparatus can be reduced, and the number of output terminals can be minimized.

## Description

### BACKGROUND OF THE INVENTION

### 1. Field of the Invention

The present general inventive concept relates to a video apparatus and a control method thereof. More particularly, the present general inventive concept relates to a video apparatus having an integrated terminal and a control method thereof.

### 2. Description of the Related Art

Photographing devices contained in video apparatuses, such as digital cameras and digital camcorders, are capable of recording video generated by photographing objects. Photographing devices can also play back the photographed and recorded video, and can allow the played-back video to be displayed on televisions (TVs) connected to the photographing devices.

If a user attempts to connect a photographing device to a TV, a cable is generally used. A variety of different cables may be used according to the type of photographed video signal.

In other words, depending on the type of video signal of the photographing device (for example, a component signal, a composite signal, or a separate signal), various types of cable may be needed to connect the photographing device to a TV.

Typically, cables used to connect a component signal of a photographing device to a TV do not support audio signals, so a user needs to connect a photographing device to a TV using a cable which supports a component signal and a cable which supports an audio signal in order to play back a moving image captured using a component signal on a TV.

Accordingly, two cables are typically required to connect a TV and a photographing device which supports a component video signal, limiting the degree to which the size of the photographing device can be reduced.

### SUMMARY OF THE INVENTION

The present general inventive concept may provide a video apparatus to output a video signal and/or an audio signal via a single terminal so that compactness of the video apparatus can be improved, and a control method thereof.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept may be achieved by providing a video apparatus, including an output unit to switch a component signal and a non-component signal to selectively output the component signal or the non-component signal via a predetermined terminal, and to switch an audio signal to selectively output the audio signal, and a controller to control the switching of the output unit to output one of the component signal and the non-component signal according to a type of cable connected to the predetermined terminal, and to output the audio signal via the predetermined terminal.

The controller may control the output unit to output the switched signal to an external apparatus if a change in impedance out the output unit is detected.

The controller may detect a signal level which varies according to the type of connected cable. If the detected signal level is high, the controller may control the output unit to switch the component signal, and if the detected signal level is low, the controller may control the output unit to switch the non-component signal.

The non-component signal may include at least one of a composite signal and a separate signal.

If the non-component signal includes the composite signal, the output unit may selectively output one of the composite signal and the non-component signal.

If the non-component signal includes the separate signal, the output unit may include a first output unit to selectively output one of a component luminance signal and a separate luminance signal, and a second output unit to selectively output one of a component chrominance signal and a separate chrominance signal.

The controller may detect a signal level which varies according to characteristics of a predetermined pin in the cable connected to the video apparatus.

If a predetermined pin in the cable is connected to a ground, the controller may detect a low level signal, and if a predetermined pin in the cable is open, the controller may detect a high level signal.

The foregoing and/or other aspects and utilities of the present general inventive concept may also be achieved by providing a control method of a video apparatus, the method including determining a type of cable connected to a predetermined terminal, switching a component signal and a non-component signal to selectively output one of the component signal and the non-component signal via the predetermined terminal based on the determined type of cable, switching an audio signal to selectively output the audio signal, and outputting the switched signals via the predetermined terminal.

The determining may include outputting a signal level which varies according to the type of cable connected to the predetermined terminal.

The switching may include switching the component signal if the signal level is high, and switching the non-component signal if the signal level is low.

The signal level may vary according to characteristics of a predetermined pin in the cable connected to the video apparatus.

If a predetermined pin in the cable is connected to a ground, the signal level may be low, and if a predetermined pin in the cable is open, the signal level may be high.

The non-component signal may include at least one of a composite signal and a separate signal.

The foregoing and/or other aspects and utilities of the present general inventive concept may also be achieved by providing a video apparatus, including an output unit to output a component signal or a non-component signal via an output terminal of the output unit, and a controller to transfer the component signal or the non-component signal to the output unit according to a state of the output terminal.

The state of the output terminal may correspond to a type of cable connected to the output terminal.

The state of the output terminal may correspond to an impedance associated with the output terminal.

The output terminal may include a plurality of pins to output the transferred signal to an external apparatus.

The foregoing and/or other aspects and utilities of the present general inventive concept may also be achieved by providing a control method of a video apparatus, the method including detecting a type of cable connected to an output terminal of the video apparatus, setting an output mode of the video apparatus based on the detected type of cable, detecting an impedance of an external apparatus connected to the cable, and transmitting a video signal corresponding to the type of cable in response to a change in the detected impedance.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:

FIG. 1 is a block diagram of a digital camcorder to which the present general inventive concept is applicable;

FIG. 2 is a table illustrating the functions of pins in an output terminal provided in an output unit of the digital camcorder of FIG. 1;

FIG. 3 is a table illustrating the functions of pins in an input terminal provided in a non-component cable;

FIG. 4 is a table illustrating the functions of pins in an input terminal provided in a component cable;

FIG. 5 is a detailed block diagram illustrating the interior of the output unit;

FIGS. 6A and 6B are views illustrating the switching states of the output unit when a specific cable is connected to the output unit; and

FIG. 7 is a flowchart illustrating a method to control a video signal and/or an audio signal according to an output mode of the digital camcorder, according to an embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

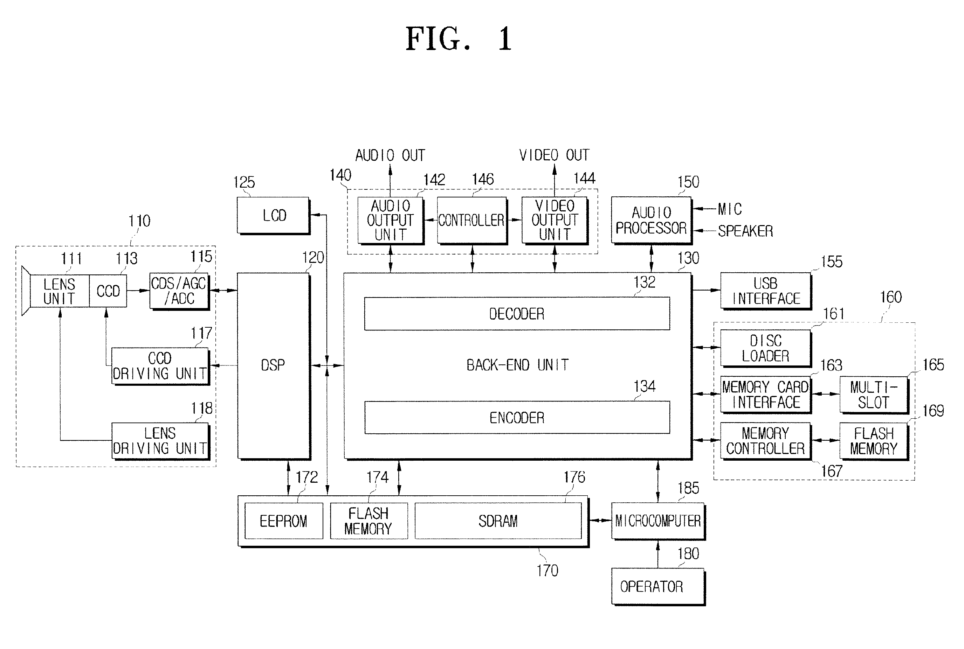

FIG. 1 is a block diagram of a digital camcorder to which the present general inventive concept may apply. In FIG. 1, the digital camcorder according to an embodiment of the present general inventive concept may include a capturing unit 110, a digital signal processor (DSP) 120, a liquid crystal display (LCD) 125, a back-end unit 130, an output unit 140, an audio processor 150, a universal serial bus (USB) interface 155, a recording unit 160, a storage unit 170, an operator 180 and a microcomputer 185.

The capturing unit 110 may convert an optical signal input through a lens to an electrical signal, and may perform predetermined signal processing of the electrical signal. The capturing unit 110 may include a lens unit 111, a charge coupled device (CCD) 113, a correlated double sampler (CDS)/automatic gain controller (AGC)/analog-to-digital converter (ADC) 115, a CCD driving unit 117 and a lens driving unit 118.

The lens unit 111 may form an optical image of an object on an optical plane of the CCD 113 to be described in more detail below.

The lens driving unit 118 may operate the lens unit 111. For example, the lens unit 111 may be operated using a zoom motor (not illustrated) to perform zoom in and zoom out functions, by driving a focus motor to adjust the focus, and by driving an iris motor to control the opening degree of the iris (not illustrated) of the lens unit 111.

The CCD 113 may be operated by the CCD driving unit 117, and may function as a sort of capturing device to convert video captured through the lens unit 111 to an electrical signal. The CCD 113 may output signals accumulated every 1/30 of a second (that is, a period of time equivalent to a single frame), or every 1/60 of a second (that is, a period of time corresponding to a single field). The digital camcorder according to an exemplary embodiment of the present general inventive concept can be implemented as a complementary metal oxide semiconductor (CMOS) capturing device instead of the CCD 113.

The CDS/AGC/ADC 115 may perform signal processing, such as correlated double sampling, automatic gain control and analog/digital (A/D) conversion, with respect to the electrical signal output from the CCD 113.

The DSP 120 may perform signal processing with respect to the video signal output from the capturing unit 110, and may output the processed signal to the back-end unit 130 and/or the LCD 125.

Specifically, the DSP 120 can convert the format of the video signal output from the capturing unit 110, and can process the video signal according to setting information such as digital zoom information required to adjust the scale of the video, automatic white balancing (AWB) information or other information, to output the processed video signal to the back-end unit 130 and/or the LCD 125. Additionally, the DSP 120 can perform automatic focus (AF) and automatic exposure (AE) functions.

When the DSP 120 converts the format of the video signal, the video signal output from the capturing unit 110 may be converted into a format of at least one of a composite signal, a separate signal and a component signal.

For reference, the composite signal refers to a signal in which the chrominance and luminance components may be mixed, and the separate signal refers to a signal in which the chrominance and luminance components may be separated. The component signal refers to a signal which may be divided into one chrominance component and two luminance components. Due to these characteristics, the image quality of the signals typically increases in order from the composite signal (lowest), to the separate signal, to the component signal (highest). The term non-component signal may refer to signals other than component signals, for example the composite signal and/or the separate signal.

The LCD 125 may be a display device to display the video signal output from the DSP 120 or the back-end unit 130.

The back-end unit 130 may perform signal processing such as compressing, expanding, and playing back, with respect to a video signal and/or an audio signal. The back-end unit 130 may also include a decoder 132 and an encoder 134.

The decoder 132 may retrieve a video signal received from the recoding unit 160, may decode the received video signal so as to be suitable to display, and may output the decoded video signal to a video output unit 144 and/or the LCD 125.

If the decoded video signal is output to the video output unit 144 and/or the LCD 125, the back-end unit 130 can perform an on-screen-display (OSD) process on the decoded video signal. The decoder 132 may retrieve the video signal as at least one of the component signal, separate signal and composite signal. Additionally, if a moving image is recorded in the recording unit 160, the decoder 132 may decode the audio signal.

The encoder 134 may compress the video signal received from the DSP 120 and the audio signal received from the audio processor 150 into a predetermined format, and then may transfer compressed files generated by the encoder 134 to the recording unit 160.

The back-end unit 130 can perform a switching function to transfer to the output unit 140 the video signal received from the DSP 120 and the audio signal received from the audio processor 150.

The output unit 140 may output the video and/or audio signals output from the back-end unit 130 to an external apparatus (for example, a TV).

The output unit 140 may include a video output unit 144, an audio output unit 142 and a controller 146. The video output unit 144 may output the video signal including the composite signal, separate signal, and/or component signal from the back-end unit 130 to the external apparatus. The audio output unit 142 may also output the audio signal output from the back-end unit 130 to the external apparatus. The controller 146 may switch at least one of the composite signal, separate signal and component signal according to a detected signal level. The detected signal level may be detected based on the characteristics of a cable to enable the digital camcorder to be connected to the external apparatus. The controller 146 may also control the video output unit 144 so that the switched signal can be output according to a change in impedance. The output unit 140 will be described in more detail below.

The audio processor 150 may convert an analog audio signal input through an audio input device such as a microphone into a digital audio signal, and may transfer the digital audio signal to the back-end unit 130. Additionally, the audio processor 150 may convert the digital audio signal output from the back-end unit 130 into an analog audio signal, and may output the analog audio signal to a speaker.

The USB interface 155 may provide a USB communication interface between a USB device, such as a PC and a printer, and the digital camcorder.

The recording unit 160 may record the compressed files output from the back-end unit 130 in a recording medium. The recording unit 160 may include a disc loader 161, a memory card interface 163, a multi-slot 165, a memory controller 167 and a flash memory 169.

The disc loader 161 may write the compressed files input from the back-end unit 130 on a built-in disc. Additionally, the disc loader 161 may read the compressed files written on the built-in disc, and may output the read files to the back-end unit 130. In the embodiments of the present general inventive concept, a compact disc (CD), a digital versatile disc (DVD), a blueray disc (BD) and/or a high definition-DVD (HD-DVD) may be used as a disc, although it is understood that any known or later developed disc or other recording medium may be used without departing from the principles and spirit of the present general inventive concept.

The memory card interface 163 may write the compressed files input from the back-end unit 130 on various memory cards mounted in the multi-slot 165.

Additionally, the memory card interface 163 may read the compressed files written on the various memory cards mounted in the multi-slot 165, and may output the read files to the back-end unit 130. A multimedia card (MMC) and a secure digital (SD) card may be used as a memory card.

The memory controller 167 may write the compressed files input from the back-end unit 130 on the flash memory 169, which may be a built-in memory. The memory controller 167 may also read the compressed files written on the flash memory 169, and may output the read files to the back-end unit 130.

As mentioned above, the disc, memory card and flash memory 169 may be used as recording media. In addition, the present general inventive concept may be applicable to a hard disk drive (HDD) or a detachable recording medium. Moreover, the recording medium may include a temporary storage region to temporarily store data (including video signals and/or audio signals), and a recording region to record the data. Data stored in the temporary storage region may be recorded in the recording region.

The storage unit 170 may store information regarding programs required to control a system of the digital camcorder and setting information of the digital camcorder. The storage unit 170 may include an electrically erasable and programmable read only memory (EEPROM) 172, a flash memory 174 and a synchronous dynamic random memory (SDRAM) 176. The EEPROM 172 may store information, for example setting information of the digital camcorder, which may be retained even after the power source is turned off, the flash memory 174 may store programs required to control the back-end unit 130 and multimedia content, and the SDRAM 176 may be used as a storage space in which various data may be backed up temporarily. In order to upgrade the programs required to control the digital camcorder, upgrade programs may be downloaded from an external apparatus connected via a communication line, and the downloaded programs may be stored in the flash memory 174 and then may be used. Data stored in the EEPROM 172 and flash memory 174 may remain even after the power source is turned off, but data stored in the SDRAM 176 may be deleted.

The operator 180 may serve as a device to receive user commands and transfer the user commands to the microcomputer 185. The operator 180 may be attached to or detached from the video apparatus.

The microcomputer 185 may control the entire operation of the digital camcorder. If a playback command is input through the operation 180 when the output unit 140 is connected to the external apparatus, the microcomputer 185 may control function blocks of the digital camcorder so that predetermined video and audio signals can be output to the external apparatus.

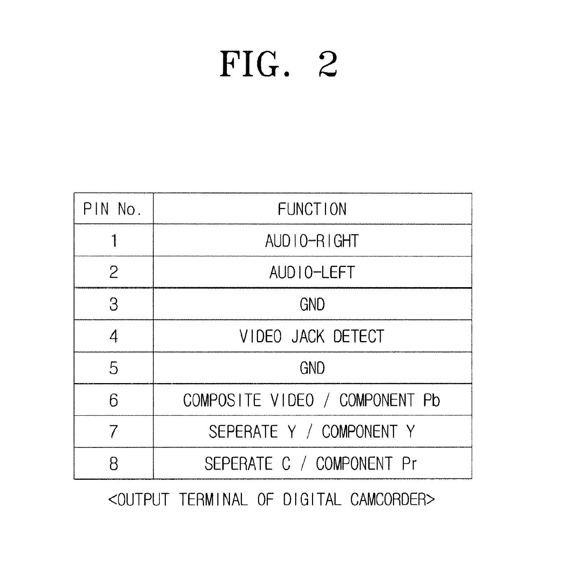

FIG. 2 is a table illustrating the functions of pins in an output terminal provided in the output unit 140 of the digital camcorder of FIG. 1.

In FIG. 2, audio signals may be output through a pin 1 and a pin 2, and video signals may be output through a pin 6, a pin 7 and a pin 8. Specifically, a composite signal or a signal Pb among component chrominance signals may be output through the pin 6, and a separate luminance signal or a component luminance signal may be output through the pin 7. Additionally, a separate chrominance signal or a signal Pr among component chrominance signals may be output through the pin 8. A video selection signal may be output through a pin 4, and a pin 3 and a pin 5 may be connected to the ground.

All the pins illustrated in FIG. 2 may be contained in a single terminal, and the audio signals and one of the composite signal, separate signal and component signal can be output through the pins, making it possible to achieve improved compactness of the digital camcorder. In addition, various types of video signals can be selectively output through a single pin, so it is possible to minimize the number of output terminals.

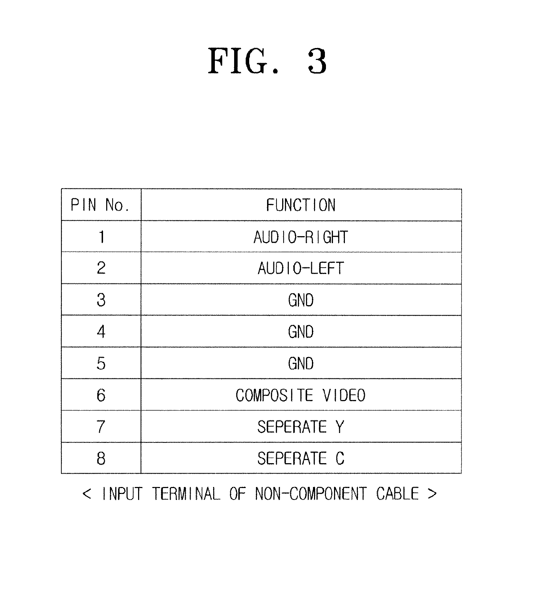

FIG. 3 is a table illustrating the functions of pins in an input terminal provided in a cable (hereinafter referred to as a "non-component cable") capable of transmitting non-component signals and audio signals to an external apparatus.

As illustrated in FIG. 3, audio signals may be input from the digital camcorder through a pin 1 and a pin 2, and video signals may be input from the digital camcorder through a pin 6, a pin 7 and a pin 8. Specifically, a composite signal may be input through the pin 6, a separate luminance signal may be input through the pin 7, and a separate chrominance signal may be input through the pin 8. Additionally, a pin 3 and a pin 5 may be connected to the ground. In particular, if a video selection signal transferred to the controller is connected to a pin 4 even when the video selection signal indicates a high level, the video selection signal may be converted to a low level signal.

Therefore, if a user connects the input terminal of the non-component cable to the output terminal of the output unit 140, and connects an output terminal of the non-component cable to an input terminal of a TV, at least one of the composite signal, separate signals and audio signals may be transmitted from the digital camcorder to the TV.

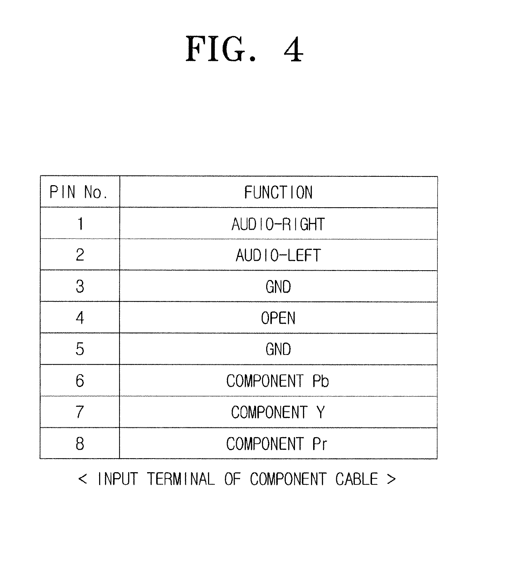

FIG. 4 is a table illustrating the functions of pins in an input terminal provided in a cable (hereinafter referred to as a "component cable") capable of transmitting component signals and audio signals to an external apparatus.

As illustrated in FIG. 4, audio signals may be input from the digital camcorder through a pin 1 and a pin 2, and video signals may be input from the digital camcorder through a pin 6, a pin 7 and a pin 8. Specifically, a signal Pb among component chrominance signals may be input through the pin 6, a component luminance signal may be input through the pin 7, and signal Pr among component chrominance signals may be input through the pin 8. Additionally, a pin 3 and a pin 5 may be connected to the ground, and a pin 4 may be open. Accordingly, if a high level of a video selection signal is transferred to the controller, the video selection signal may be maintained at the high level.

Therefore, if a user connects the input terminal of the component cable to the output terminal of the output unit 140, and connects an output terminal of the component cable to an input terminal of a TV, at least one of the component signals and audio signals may be transmitted from the digital camcorder to the TV.

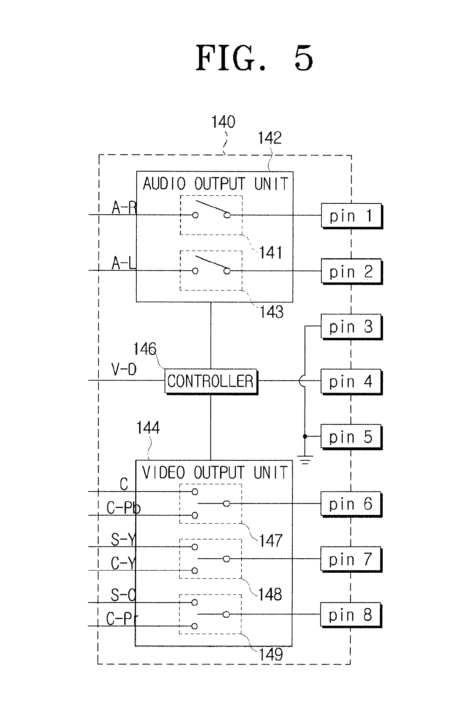

Hereinafter, the output unit 140 to transmit a video signal and/or an audio signal of either a component signal or a non-component signal selected according to the type of cable to a TV will be described in detail with reference to FIGS. 5 to 7.

FIG. 5 is a detailed block diagram illustrating the interior of the output unit 140.

In FIG. 5, the audio output unit 142 may include a first audio output unit 141 and a second audio output unit 143, each of which may include a digital-to-analog converter (DAC) integrated circuit (IC) (not illustrated) to convert a digital audio signal to an analog audio signal. Additionally, the first audio output unit 141 may switch an audio-right signal (hereinafter, referred to as "signal A-R") to be output to an external apparatus via the pin 1 under the control of the controller 146, and the second audio output unit 143 may switch an audio-left signal (hereinafter, referred to as "signal A-L") to be output to an external apparatus via the pin 2 under the control of the controller 146.

The video output unit 144 may include a first video output unit 147, a second video output unit 148 and a third video output unit 149. Each of the first, second and third video output units 147, 148 and 149 may include a DAC IC (not illustrated) to convert a digital video signal to an analog video signal. The first video output unit 147 may switch one of composite signal C and component Pb signal C-Pb to be output to an external apparatus via the pin 6, and the second video output unit 148 may switch one of separate luminance signal S-Y and component luminance signal C-Y to be output to an external apparatus via the pin 7. Additionally, the third video output unit 149 may switch one of separate chrominance signal S-C and component Pr signal C-Pr to be output to an external apparatus via the pin 8.

The controller 146 may allow a predetermined signal to be switched according to the level detected from the video selection signal, and may control the audio output unit 142 and the video output unit 144 so that the switched signal can be output to an external apparatus according to the change in impedance detected by the audio output unit 142 and the video output unit 144. Specifically, if the digital camcorder is turned on, a predetermined voltage may be applied to the controller 146, so that the video selection signal can become the high level. Accordingly, the controller 146 may detect the high level of the video selection signal. If the high level is detected, the controller 146 may set the digital camcorder to be operated in a component output mode. Therefore, the controller 146 may control the audio output unit 142 so that signals A-R and A-L can be switched, and may also control the video output unit 144 so that signals C-Pb, C-Y and C-Pr can be switched.

If the low level is detected, the controller 146 may convert the output mode of the digital camcorder to a non-component output mode. Accordingly, the controller 146 may control the audio output unit 142 so that signals A-R and A-L can be switched, and may also control the video output unit 144 so that signals C, S-Y and S-C can be switched.

If the change in impedance (not illustrated) is detected in the audio output unit 142 and video output unit 144, the controller 146 may control the audio output unit 142 and video output unit 144 so that the signal in the output unit in which the change in impedance can be detected and transmitted to an external apparatus.

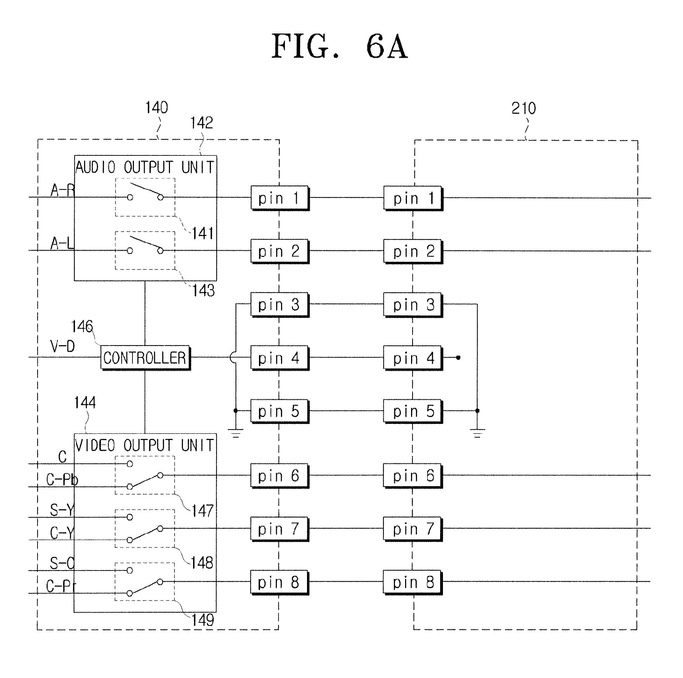

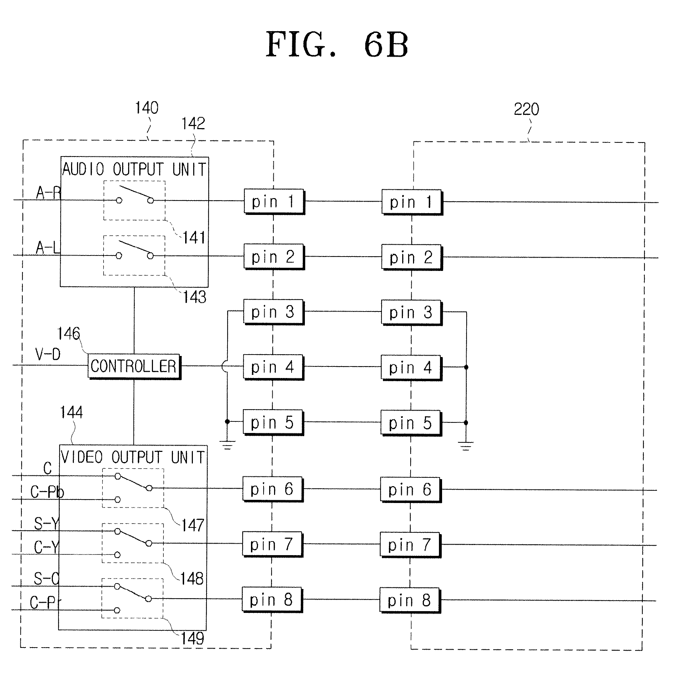

FIG. 6A illustrates the switching state of the output unit 140 when a component cable 210 is connected to the output unit 140, and FIG. 6B illustrates the switching state of the output unit 140 when a non-component cable 220 is connected to the output unit 140.

Referring to FIG. 6A, a predetermined voltage may be applied to the controller 146 when the digital camcorder is turned on, and accordingly the controller 146 may detect the high level of the video selection signal. The controller 146 may then control the audio output unit 142 and video output unit 144 so that the digital camcorder can be operated in the component output mode. Additionally, a user may connect each pin of the output terminal of the output unit 140 to each pin of an input terminal of the component cable 210. Since a pin 4 of the input terminal of the component cable 210 may be open, the controller 146 may continue to detect the high level. Therefore, the controller 146 may control the audio output unit 142 and video output unit 144, so that the switching state illustrated in FIG. 6A can be maintained.

However, if the user connects an input terminal of the non-component cable 220 to the output terminal of the output unit 140 when the digital camcorder is turned on, the controller 146 may control the audio output unit 142 and video output unit 144, so that the switching operation illustrated in FIG. 6B can be performed. In other words, a pin 4 of the input terminal of the non-component cable 220 may be connected to the ground, and so if the non-component cable 220 is connected to the output unit 140, the video selection signal may become a low level signal. The controller 146 may then detect the low level signal, and may control the audio output unit 142 and video output unit 144 so that the digital camcorder can be operated in the non-component output mode.

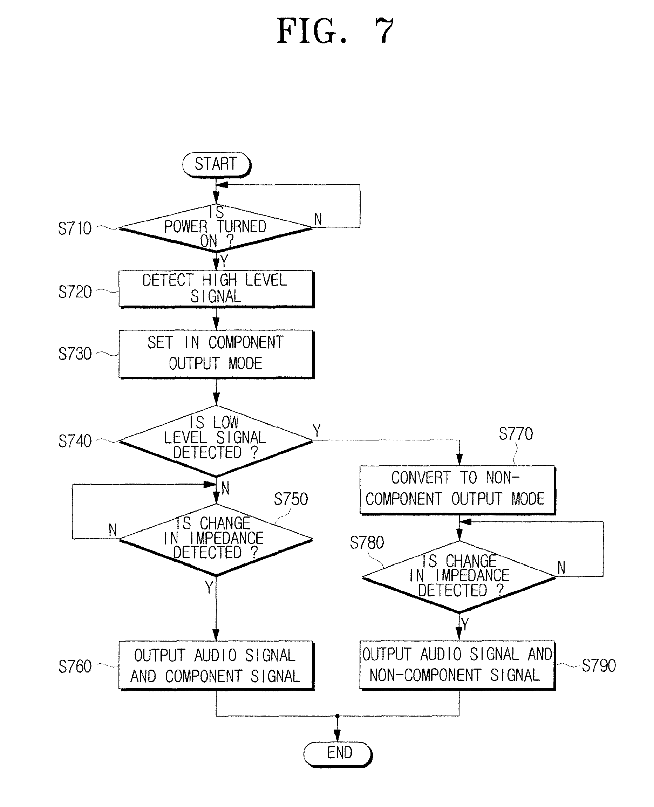

FIG. 7 is a flowchart illustrating a method to control a video signal and/or an audio signal according to an output mode of the digital camcorder, according to an embodiment of the present general inventive concept.

If the power source is turned on in operation S71 0, the controller 146 may detect a high level signal in operation S720. Specifically, if a user turns on the digital camcorder, the video selection signal transferred to the controller 146 may become a high level signal, and thus the controller 146 can detect the high level signal.

If the high level is detected, the controller 146 may set the digital camcorder to be operated in the component output mode in operation S730. As described above, the controller 146 may control the audio output unit 142 so that signals A-R and A-L can be switched, and may also control the video output unit 144 so that signals C-Pb, C-Y and C-Pr can be switched.

The controller 146 may determine whether the low level is detected in operation S740. Specifically, if the non-component cable is connected to the output unit 140, the video selection signal may be converted to the low level because the pin 4 of the non-component cable is connected to the ground. Accordingly, the controller 146 may detect the low level. However, if the component cable is connected to the output unit 140, the video selection signal may maintain the high level because the pin 4 of the component cable is open.

If it is determined that the low level is not detected, the controller 146 may determine whether impedance is changed in the audio output unit 142 and video output unit 144 in operation S750. If a user connects the output terminal of the output unit 140 to the input terminal of the component cable and does not connect the output terminal of the component cable to the TV, the output terminals of a video signal and/or an audio signal may be open, so the impedance may be unchanged. However, if the user connects the output terminal of the component cable to the TV, impedance of the audio output unit 142 and video output unit 144 may be changed due to the impedance of the TV. For example, when the user connects the output terminals of the component cable to output the video and audio signals to an input terminal of the TV, the controller 146 may determine that impedance is changed in the audio output unit 142 and video output unit 144. In other words, the controller 146 may detect a change in impedance in an output unit of a specific signal, which may be connected to a TV, and may control the corresponding output unit so that the specific signal can be output to the TV.

If it is determined that the impedance is changed, the controller 146 may output the audio signals and the component signals to an external apparatus (for example, a TV) in operation S760. The output signals may then be transmitted to the TV via the component cable and played back by the TV.

However, if it is determined that the low level is detected, the controller 146 may convert the output mode of the digital camcorder to the non-component output mode in operation S770. As described above, the controller 146 may control the audio output unit 142 so that signals A-R and A-L can be switched, and may also control the video output unit 144 so that signals C, S-Y and S-C can be switched. In other words, the detection of the low level means that a user may connect the non-component cable to the output unit 140.

Additionally, if it is determined that the low level is detected, the controller 146 may determine whether impedance is changed in the audio output unit 142 and video output unit 144 in operation S780. If a user connects the output terminal of the output unit 140 to the input terminal of the non-component cable and does not connect the output terminal of the non-component cable to the TV, output terminals of a video signal and/or an audio signal may be open, so the impedance may be unchanged. However, if the user connects the output terminal of the non-component cable to the TV, impedance of the audio output unit 142 and video output unit 144 may be changed due to the impedance of the TV. In this situation, the non-component cable may include a terminal to output a composite signal, and a terminal to output a separate signal. Accordingly, when a user connects the non-component cable to the TV, the terminal to output a composite signal or the terminal to output a separate signal may be connected to the TV.

If it is determined that the impedance is changed, the controller 146 may output the audio signals and the non-component signals to an external apparatus (for example, a TV) in operation S790. The output signals may then be transmitted to the TV via the non-component cable and played back by the TV.

While a TV may be used as an external apparatus in accordance with the present general inventive concept, it is understood that various external apparatuses may be used in addition to a TV without departing from the principles and spirit of the present general inventive concept. For example, the present general inventive concept may be applicable to any known or later developed external apparatus capable of transmitting video, in addition to a TV. Additionally, although a digital camcorder may be used as a photographing device in accordance with the present general inventive concept, the present general inventive concept may also be applicable to any known or later developed video apparatus capable of performing a signal process with respect to a component signal and a non-component signal, for example, a digital camera, a mobile phone or other video apparatuses.

As described above, the video apparatus according to embodiments of the present general inventive concept may be configured so that the pins through which the signals are transmitted may be contained in a single terminal, making it possible to achieve improved compactness of the video apparatus. Additionally, different types of video signals can be selectively output through a single pin, so it is possible to minimize the number of output terminals.

Although a few embodiments of the present general inventive concept have been illustrated and described, it will be appreciated by those skilled in the art that changes may be made in these embodiments without departing from the principles and spirit of the general inventive concept, the scope of which is defined in the appended claims and their equivalents.

## Claims

1. A video apparatus, comprising:
an output unit to switch a component signal and a non-component signal to selectively output the component signal or the non-component signal via a predetermined terminal, and to switch an audio signal to selectively output the audio signal; and
a controller to control the switching of the output unit to output one of the component signal and the non-component signal according to a type of cable connected to the predetermined terminal, and to output the audio signal via the predetermined terminal.

2. The video apparatus of claim 1, wherein the controller controls the output unit to output the switched signal to an external apparatus if a change in impedance of the output unit is detected.

3. The video apparatus of claim 1, wherein the controller detects a signal level which varies according to the type of connected cable;
the controller controls the output unit to switch the component signal if the detected signal level is high, and
the controller controls the output unit to switch the non-component signal if the detected signal level is low.

4. The video apparatus of claim 1, wherein the non-component signal comprises at least one of a composite signal and a separate signal.

5. The video apparatus of claim 4, wherein the output unit selectively outputs one of the composite signal and the non-component signal, if the non-component signal comprises the composite signal.

6. The video apparatus of claim 4, wherein if the non-component signal comprises the separate signal, the output unit comprises:
a first output unit to selectively output one of a component luminance signal and a separate luminance signal; and
a second output unit to selectively output one of a component chrominance signal and a separate chrominance signal.

7. The video apparatus of claim 1, wherein the controller detects a signal level which varies according to characteristics of a predetermined pin in the cable connected to the video apparatus.

8. The video apparatus of claim 7, wherein the controller detects a low level signal if the predetermined pin in the cable is connected to a ground, and
the controller detects a high level signal if the predetermined pin in the cable is open.

9. A control method of a video apparatus, the method comprising:
determining a type of cable connected to a predetermined terminal;
switching a component signal and a non-component signal to selectively output one of the component signal and the non-component signal via the predetermined terminal based on the determined type of cable;
switching an audio signal to selectively output the audio signal; and
outputting the switched signals via the predetermined terminal.

10. The method of claim 9, wherein the determining comprises outputting a signal level which varies according to the type of cable connected to the predetermined terminal.

11. The method of claim 10, wherein the switching comprises switching the component signal if the signal level is high, and switching the non-component signal if the signal level is low.

12. The method of claim 11, wherein the signal level varies according to characteristics of a predetermined pin in the cable connected to the video apparatus.

13. The method of claim 12, wherein the signal level is low if a predetermined pin in the cable is connected to a ground, and the signal level is high if a predetermined pin in the cable is open.

14. The method of claim 9, wherein the non-component signal comprises at least one of a composite signal and a separate signal.

15. A video apparatus, comprising:
an output unit to output a component signal or a non-component signal via an output terminal of the output unit; and
a controller to transfer the component signal or the non-component signal to the output unit according to a state of the output terminal.

16. The video apparatus of claim 15, wherein the state of the output terminal corresponds to a type of cable connected to the output terminal.

17. The video apparatus of claim 15, wherein the state of the output terminal corresponds to an impedance associated with the output terminal.

18. The video apparatus of claim 15, wherein the output terminal comprises a plurality of pins to output the transferred signal to an external apparatus.

19. A control method of a video apparatus, the method comprising:
detecting a type of cable connected to an output terminal of the video apparatus;
setting an output mode of the video apparatus based on the detected type of cable;
detecting an impedance of an external apparatus connected to the cable; and
transmitting a video signal corresponding to the type of cable in response to a change in the detected impedance.
